# FASCICULE DE BREVET EUROPEEN

(11) **EP 3 226 730 B1**
(45) Date de publication et mention de la délivrance du brevet: **23.01.2019**
(21) Numéro de dépôt: 15807959.0
(22) Date de dépôt: 26.11.2015
(51) Int. Cl.: A47J 36/26

(54) **APPAREIL ET PROCÉDÉ DE CUISSON D'ALIMENTS À L'ALCOOL**
VORRICHTUNG UND VERFAHREN ZUM GAREN VON LEBENSMITTELN MIT ALKOHOL
APPLIANCE AND METHOD FOR COOKING FOODSTUFFS WITH ALCOHOL

(30) Priorité: 02.12.2014 FR 1461809
(43) Date de publication de la demande: 11.10.2017
(73) Titulaire: Cookal, 54320 Maxeville (FR)
(72) Inventeur: PROBST, Laurent, 94140 Alfortville (FR)
(74) Mandataire: Hege, Frédéric
(86) Numéro de dépôt international: PCT/FR2015/053237
(87) Numéro de publication internationale: WO 2016/087753

(56) Documents cités:
- EP-A1- 0 589 045
- DE-U1-202011 004 690
- FR-A1- 3 004 095
- GB-A- 151 703
- US-A- 1 327 508

## Description

L'invention concerne le domaine de la cuisson d'aliments. Elle concerne plus particulièrement un appareil et un procédé de cuisson à alcool, de préférence adapté pour faire de la cuisson un spectacle avant la dégustation.

Plusieurs appareils et procédés de cuisson à l'alcool ont été proposés. Dans la cuisson à l'alcool, plusieurs problématiques doivent être prises en compte.

Une première problématique concerne l'alcool utilisé. Pour permettre une cuisson contrôlée, il faut définir une quantité précise d'alcool qui doit se consumer pour dégager la chaleur nécessaire à la cuisson. Dans certains procédés de l'état de la technique on enflamme un alcool, mais après un certain temps la flamme s'éteint du fait que l'alcool résiduel est trop dilué dans l'eau. Dans d'autres procédés, la chaleur dégagée n'est pas correctement dirigée vers l'aliment à cuire. Dans d'autres procédés encore, la sécurité n'est pas bien assurée, et en cas de chute de l'appareil, de l'alcool enflammé peut se répandre et provoquer des dégâts.

Le document FR 2 897 521 décrit un appareil de cuisson ou de chauffage d'aliments du type comportant un support sur lequel repose un réservoir apte à recevoir un liquide de combustion, ledit support étant apte à maintenir un récipient à hauteur prédéterminée par rapport au réservoir. Toutefois cet appareil ne permet pas une cuisson fiable, une trop grande partie de la chaleur produite étant dissipée.

Le document FR 3 004 095 décrit un appareil de cuisson permettant une meilleure utilisation de la chaleur. Toutefois les risques liés à l'alcool enflammé en cas de chute de l'appareil ne sont pas écartés. Par ailleurs le support visible du récipient gâche la vision du spectacle formé par la cuisson de l'aliment, et en cas d'installation d'une source de lumière dans le réservoir, la propagation de la lumière du réservoir vers le récipient n'est pas satisfaisante.

Le document GB131703 décrit un dispositif pour chauffer le contenu d'un récipient. Cependant ce dispositif ne permet pas de faire de la cuisson des aliments un spectacle pour les convives.

La présente invention se propose de remédier à au moins une partie des inconvénients précités et propose une solution qui permette d'obtenir une cuisson homogène d'un aliment disposé dans un récipient par la combustion d'un alcool disposé dans un réservoir à l'extérieur dudit récipient.

Un autre objet de la présente invention est de proposer un dispositif permettant de bien voir la cuisson entrain de se faire.

Un autre objet de la présente invention est de proposer un dispositif permettant une sécurité améliorée.

Un autre objet de la présente invention est de proposer un procédé de cuisson permettant une bonne maitrise de la quantité d'alcool utilisée, tout en améliorant la sécurité d'utilisation.

A cet effet, l'invention concerne un appareil de cuisson d'aliment du type comportant un réservoir apte à recevoir un liquide de combustion et un récipient destiné à recevoir ledit aliment et comportant une base à son extrémité inférieure et une paroi latérale, ledit appareil comportant en outre un support de maintien dudit récipient en relation audit réservoir. Ce réservoir est particulier en ce que ledit support de maintien est disposé au niveau de ladite base, de sorte à laisser substantiellement toute la paroi visible.

Grâce à ces dispositions on obtient un support de maintien très discret, ce qui permet une bonne vue du récipient, sans obstacle.

Selon d'autres caractéristiques :
- ledit support de maintien peut consister en un plot solidaire dudit récipient, et une encoche dans ledit réservoir, configurée pour coopérer avec ledit plot, de sorte que lorsque ledit plot est introduit dans ladite encoche, le récipient est maintenu par rapport audit réservoir, constituant un maintien robuste du récipient par rapport au réservoir tout en permettant une simplicité de montage / démontage de l'appareil de cuisson selon l'invention,
- ladite encoche peut contenir un insert en un matériau élastique, permettant ainsi un bon maintien même quand par le jeu des tolérances de fabrication, le plot n'a pas exactement la forme théorique ; une telle disposition permet par ailleurs d'obtenir une résistance à l'arrachement en plus du maintien contre la chute du récipient, rendant possible un effort de serrage des parois de l'encoche sur le plot, par l'intermédiaire de l'insert,

- ledit plot peut comporter une partie inférieure plus large que sa partie supérieure ; une telle disposition améliore la tenue à l'arrachement du récipient, et permet en particulier d'éviter en cas de choc, la désolidarisation du récipient par rapport au réservoir.
- ledit support de maintien peut consister en une soudure entre le réservoir et le récipient, disposée à la base du récipient, constituant un moyen de réalisation robuste et peu cher à produire.

La présente invention concerne encore un appareil de cuisson ou de chauffage d'aliment du type comportant un réservoir apte à recevoir un liquide de combustion, un récipient destiné à recevoir ledit aliment et un support de maintien desdits réservoir et récipient. Cet appareil est particulier en ce qu'il comporte une source de lumière, de préférence par LED, située au niveau du réservoir.

Grâce à ces dispositions, la lumière diffuse dans le récipient lorsque celui-ci est transparent, et l'illumine. L'observation de la cuisson de l'aliment devient alors un spectacle féérique.

Le récipient peut aussi être translucide, permettant de produire un effet de lumière différent.

La combinaison de cette disposition avec la présence d'un plot ou d'une soudure sous un récipient transparent permet d'obtenir un effet particulièrement spectaculaire par l'illumination du récipient, rendant féérique le spectacle de la cuisson de l'aliment dans le récipient.

Selon d'autres caractéristiques :
- ledit récipient peut être translucide ou transparent, permettant de produire un effet de lumière différent,

L'invention concerne encore un appareil de cuisson ou de chauffage d'aliment du type comportant un réservoir apte à recevoir un liquide de combustion, un récipient destiné à recevoir ledit aliment et un support de maintien desdits réservoir et récipient. Ce réservoir est particulier en ce qu'il comporte un compartiment interne destiné à recevoir le liquide de combustion, et un compartiment externe destiné à recevoir de l'eau, et ledit compartiment externe entoure complètement le compartiment interne.

Grâce à ces dispositions, de l'alcool brûlant dans le compartiment interne qui serait éjecté par une chute de l'appareil, se répand dans le compartiment externe, où la combustion s'arrête du fait de la présence d'eau.

Selon d'autres caractéristiques :
- le point le plus bas de la crête, définie comme le sommet de la paroi interne, située entre le compartiment interne et le compartiment externe, peut être situé plus bas que le point le plus bas du sommet de la paroi externe, limitant vers l'extérieur le compartiment externe, permettant ainsi une sécurité accrue, et une bonne garantie qu'aucun liquide, enflammé ou non ne s'échappe du réservoir,
- ledit compartiment interne peut comporter une paroi remontant d'une façon inclinée vers le récipient ; cette disposition permet une meilleure orientation des flammes et de la chaleur vers le récipient, et donc un meilleur rendement.

La présente invention concerne encore un appareil de cuisson d'aliment du type comportant un réservoir apte à recevoir un liquide de combustion et un récipient destiné à recevoir ledit aliment et comportant une base à son extrémité inférieure et une paroi latérale. Ledit récipient est particulier en ce que ladite paroi latérale comporte un interstice et une double peau, configurés pour contenir un fluide caloporteur apte à répartir la chaleur sur la hauteur de la paroi.

Grâce à ces dispositions, il devient possible de cuire de façon satisfaisante et homogène même un aliment peu conducteur de la chaleur. La chaleur est répartie sur toute la hauteur de la paroi par ledit fluide caloporteur, et on obtient ainsi un environnement uniformément chaud à l'intérieur du récipient.

La présente invention concerne également un procédé de cuisson d'un aliment, en particulier avec un appareil selon l'invention. Ce procédé est particulier en ce qu'il concerne les étapes suivantes :
- on prépare une quantité d'alcool, de préférence d'un degré supérieur à 92°, dans une dosette fermée, de sorte à pouvoir conserver une telle dosette entre sa fabrication et son utilisation sans risque de pollution ou de perte de matière de ladite quantité d'alcool,
- on dispose un aliment à cuire dans le récipient,
- on ouvre la dosette, et on verse son contenu dans le réservoir
- on enflamme l'alcool et on le laisse brûler jusqu'à ce qu'il soit entièrement consumé.

Un tel procédé permet de garantir en toute circonstance l'application de la quantité adéquate d'alcool, la qualité de cet alcool, et notamment son degré qui doit de préférence être supérieur à 92°, et permet ainsi d'obtenir une cuisson à un degré parfaitement contrôlé de l'aliment, même pour son utilisation par des personnes non professionnelles. Un autre avantage est la réduction très nette du risque d'incendie lié à l'utilisation d'un alcool en tant que carburant. En effet l'inflammation de quelques millilitres d'alcool présente certes un risque de propagation de la flamme, mais bien inférieur au risque lié à une bouteille d'alcool, dont on prélèverait une petite quantité à chaque utilisation et dont une plus grande quantité pourrait se répandre par accident. Un autre avantage encore est la réduction très nette du risque d'ingestion lié à l'utilisation d'un alcool. En effet si un enfant ingurgite le contenu d'une telle dosette, il ingurgite typiquement quatre à cinq millilitres d'alcool, certes presque pur ; une telle quantité ne provoque pas de risque sanitaire lorsque l'ingestion est isolée.

Selon un mode préféré de réalisation de l'invention, on verse une quantité prescrite d'eau dans le compartiment externe, permettant ainsi une sécurité accrue contre une propagation accidentelle de l'alcool enflammé.

Selon un autre mode préféré de réalisation de l'invention, l'étape d'ouverture de la dosette se fait par rotation d'une manette produisant la rupture d'une pointe de la dosette.

L'invention concerne enfin un procédé de rafraichissement d'un aliment à l'aide d'un appareil selon l'invention, et comportant les étapes suivantes :
- on prépare une quantité de fluide froid
- on dispose un aliment à rafraichir dans le récipient,
- on verse la quantité de fluide froid dans le réservoir et on laisse agir.

Un tel procédé permet de transformer une crème en glace devant le convive, et propose donc encore un autre type de spectacle. Pour la bonne compréhension, dans la suite de cette description l'appareil est décrit comme un appareil de cuisson, dans le sens qu'il est apte à réaliser une cuisson, comme cela va être décrit plus en détail ci-après. Le procédé de rafraichissement n'est pas une cuisson, mais se fait avec le même appareil, qu'on continuera donc d'appeler un appareil de cuisson.

L'avantage découlant de la présente invention consiste en ce qu'elle permet d'obtenir une cuisson fiable, reproductible, est sûre qui peut être effectuée à table, individuellement pour chaque client ou convive, ce qui produit un spectacle original préalable à la dégustation. Elle permet aussi de proposer des appareils de cuisson à des particuliers, non professionnels, pour une utilisation privée, avec un niveau de risque très faible.

D'autres caractéristiques et avantages de l'invention ressortiront de la description détaillée qui va suivre se rapportant à un exemple de réalisation donné à titre indicatif et non limitatif.

La compréhension de cette description sera facilitée en se référant aux dessins joints, dans lesquels :
- la figure 1 représente une vue en coupe d'un appareil de cuisson selon un premier mode de réalisation de l'invention ;
- la figure 2 représente une vue en coupe d'un appareil de cuisson selon un deuxième mode de réalisation de l'invention ;
- la figure 3 représente une vue en coupe d'un appareil de cuisson selon un troisième mode de réalisation de l'invention ;
- la figure 4 représente une vue en coupe d'un récipient selon un quatrième mode de réalisation de l'invention ;
- la figure 5 représente une vue en coupe d'un appareil de cuisson selon un cinquième mode de réalisation de l'invention ;
- la figure 6 représente une dosette particulièrement adaptée pour un procédé selon l'invention.

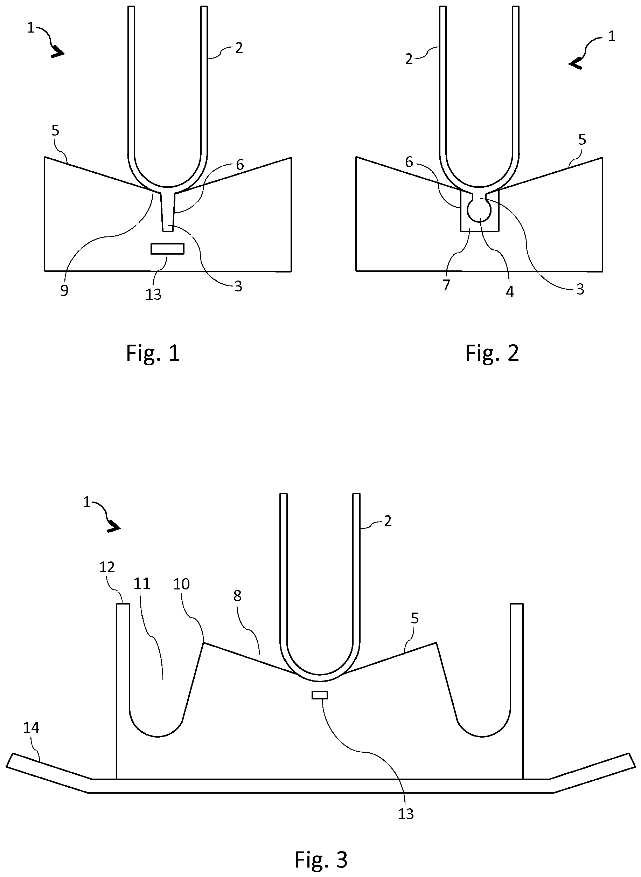

Tel que représenté aux figures 1 à 5 du dessin ci-joint, la présente invention concerne un appareil 1 de cuisson ou de chauffage d'aliments, comportant un récipient 2 muni d'un plot 3. Dans un deuxième mode de réalisation de l'invention représenté à la fig. 2, ce plot 3 peut se terminer vers le bas par un renflement 4, qui peut se présenter en forme de boule sphérique.

L'appareil 1 comporte également un réservoir 5, qui peut être muni d'une encoche 6. Dans le deuxième mode de réalisation représenté à la fig. 2, un insert 7 en matériau élastique est disposé dans l'encoche 6. Ledit insert 7 peut être collé dans l'encoche 6 pour être solidarisé de manière certaine avec le réservoir 5, et peut être par exemple en silicone. Ledit insert 7 présente une ouverture, qui peut être de forme complémentaire au plot 3. De cette manière le récipient 2 peut être maintenu par rapport au réservoir 5 lorsque le plot 3 est introduit dans l'encoche 6, et il est maintenu aussi en empêchant son arrachement accidentel, grâce au renflement 4. Seul un arrachement volontaire à la main produit la désolidarisation entre le récipient 2 et le réservoir 5.

Un des avantages d'une telle fixation amovible est qu'elle permet l'utilisation de plusieurs types de récipients 2 au choix sur un même réservoir 5. Cela permet par exemple de préparer deux récipients 2 successifs avec des aliments différents à servir successivement, et qui seront fixés successivement au réservoir 5 pour réaliser deux cuissons successives. Cela permet également de choisir un type de récipient 2 à associer à un réservoir 5, comme un récipient 5 à double peau ou non, comme développé plus loin.

Dans un autre mode de réalisation de l'invention, le moyen de fixation du récipient 2 sur le réservoir 5 peut être réalisé par une soudure pratiquée entre le réservoir 5 et le récipient 2. Il est possible d'utiliser d'autres moyens de fixation capables de solidariser le réservoir 5 et le récipient 2 disposés au niveau de la base dudit récipient 2, sans sortir du cadre de cette invention. Cela présente l'avantage de laisser les parois du récipient 2 bien visibles. Dans le cas où ces parois sont transparentes, cela permet de bien voir l'aliment en cours de cuisson. On améliore ainsi la qualité du spectacle offert par le processus de cuisson de l'aliment.

Selon un troisième mode de réalisation représenté à la fig. 3, le réservoir 5 peut comporter un compartiment interne 8, destiné à recevoir la quantité d'alcool prédéterminée pour devoir se consumer pour produire la cuisson d'un aliment contenu dans le récipient 2. La zone 9 entourant l'encoche 6 (voir fig. 1) peut présenter une forme de type sphérique, pour permettre un appui complémentaire et plus large que la dimension du plot 3, du récipient 2 sur le réservoir 5, et améliorer ainsi sa stabilité.

Le compartiment interne 8 comporte une crête 10, qui forme une barrière empêchant en situation normale l'alcool de sortir du compartiment interne 8.

Le réservoir 5 comporte ensuite un compartiment externe 11, destiné à recevoir de l'eau. Ce compartiment externe 11 est limité du côté du compartiment interne 8 par la crête 10, qui peut aussi prendre la forme d'une paroi interne, et du côté externe par une paroi externe 12.

L'appareil 1 représenté à la figure 1 est de préférence circulaire, et on comprend bien que le compartiment externe 11 entoure le compartiment interne 8. Ainsi en cas de choc sur l'appareil 1, ou de chute, il peut arriver que l'alcool contenu dans le compartiment interne 8 franchisse la crête 10. Du fait que le compartiment externe 11 entoure le compartiment interne 8, de quelque côté que l'alcool aille franchir la crête 10, il se retrouve immanquablement dans le compartiment externe 11. Là, il se mélange à l'eau, et s'il est enflammé, la flamme s'éteint immédiatement. On obtient ainsi par l'invention une amélioration très nette de la sécurité des utilisateurs de l'appareil 1 selon l'invention.

Le compartiment externe 11 peut être indépendant du compartiment interne 8, dans le sens qu'il peut s'agir de deux objects distincts, non fixés entre eux. Le récipient 2 est alors fixé au compartiment interne 8. Cela présente l'avantage supplémentaire qu'un appui involontaire latéral au niveau du haut du récipient 2 peut provoquer le renversement dudit récipient 2, ainsi que du compartiment interne 8, auquel il est fixé, mais ne pas provoquer le renversement du compartiment externe 11. La sécurité est donc encore renforcée par cette disposition.

Ce phénomène d'extinction de la flamme se produit également dans le cas où par accident ou par mégarde un utilisateur verse une grande quantité d'alcool dans le compartiment interne 8. Dès que le niveau de la crête 10 est atteint, l'alcool se déverse dans le compartiment externe 11, où il se dilue dans l'eau qui y est contenue. La crête 10 permet une sécurité de type « trop plein », et son emplacement en terme de niveau permet de régler l'effet de trop plein à une quantité maximale d'alcool pouvant être contenu dans le compartiment interne 8. Quand on enflamme l'alcool du compartiment interne 8, il produit alors une chaleur trop importante, et la cuisson sera trop forte. Mais d'une part la quantité est limitée par l'effet du trop plein, et d'autre part la flamme ne pourra pas, en cas de déversement d'une partie de l'alcool enflammé, se propager à l'alcool déversé dans le compartiment externe 11, puisque là il est trop dilué pour pouvoir rester enflammé. En l'absence d'un tel compartiment externe 11 conforme à l'invention, dans un tel cas il existe un risque fort d'inflammation d'une serviette ou d'une nappe sur laquelle l'appareil 1 peut être posé.

La fig. 3 représente l'appareil 1 sans plot 3 de fixation. Un tel plot 3 est bien sûr une des possibilités pour former le support de maintien du récipient 2. Mais d'autres types de supports sont envisageables, comme par exemple celui décrit dans le document FR3 004 095, ou encore une simple soudure du récipient 2 sur le réservoir 5 au niveau de la base du récipient 2, comme décrit ci-dessus, en combinaison ou non avec la présence d'un compartiment interne 8 destiné à recevoir le combustible, et d'un compartiment externe 11 destiné à recevoir de l'eau.

La crête 10 peut aussi être configurée de telle sorte que lorsque le compartiment interne 8 est rempli d'alcool jusqu'à cette crête 10, il contient précisément la quantité requise d'alcool. Dans un tel mode de réalisation, on peut verser une quantité excédentaire d'alcool, dont l'excédent se déverse dans le compartiment externe 11, et obtenir ainsi sans effort de la part de l'utilisateur un dosage parfait. La forme circulaire de l'appareil 1 n'est pas obligatoire. En effet il suffit que le compartiment externe 11 entoure complètement le compartiment interne 8 pour obtenir l'effet de protection. On peut imaginer toutes sortes de formes, carré, hexagonal, ovale, ... qui permettent d'obtenir le même effet, tant qu'il est vérifié que le compartiment externe 11 entoure complètement le compartiment interne 8.

En outre, la paroi externe 12 est configurée de préférence plus haute que la crête 10. En effet si par accident l'appareil 1 se renverse, on comprend que, dans le cas où les compartiments interne 8 et externe 11 ne sont pas indépendants, tout comme l'alcool va franchir la crête 10, l'eau contenue dans le compartiment externe 11 va aussi franchir la paroi externe 12. Lorsque la paroi externe 12 est plus haute que la crête 10, l'alcool va franchir la crête 10 avant que l'eau ne franchisse la paroi externe 12. On obtient ainsi une garantie que lorsque l'alcool arrive dans le compartiment externe 11, il y a toujours de l'eau dans le compartiment externe 11, capable d'éteindre la flamme de l'alcool enflammé. Cet effet est encore renforcé par le fait que la pente de la paroi externe 12 est plus forte que la pente de la paroi interne aboutissant à la crête 10. Dans la configuration représentée à la fig. 3, on comprend bien que si l'appareil 1 s'incline de plus en plus jusqu'à une chute, le compartiment interne 8 se vide complètement de son alcool, le cas échéant enflammé, avant que la première goutte d'eau ne s'échappe au-dessus de la paroi externe 12.

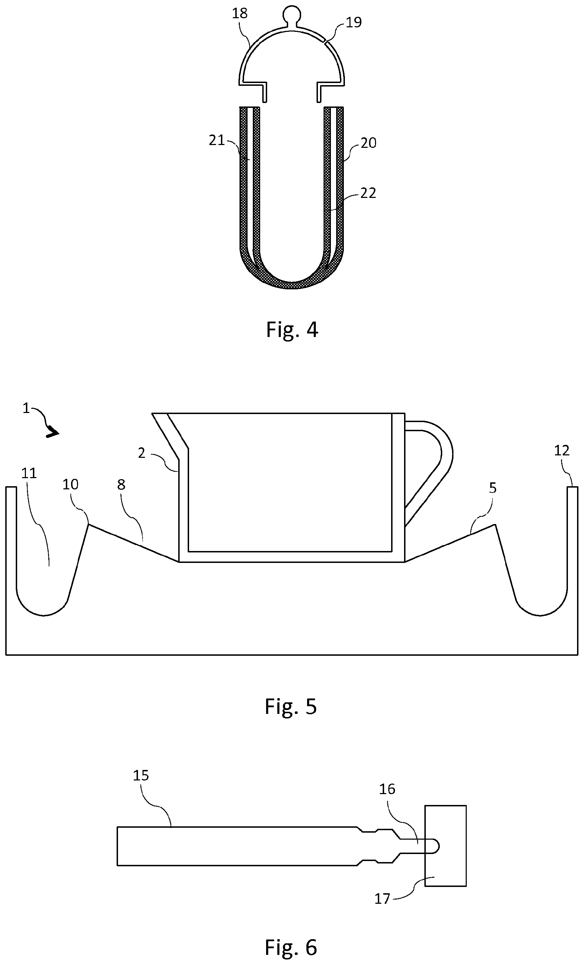

Le récipient 2 est de préférence transparent, permettant ainsi de voir l'aliment au cours de sa cuisson. Il peut présenter une forme de tube ouvert sur le dessus, sur lequel on peut poser un couvercle, représenté à la fig. 4, et terminé à sa base par une forme hémisphérique, sous laquelle peut être disposé le plot 3, comme représenté aux fig. 1 et 2, ou encore le sommet inférieur de ladite forme hémisphérique constituant la base dudit récipient 2 où est disposée sa soudure ou tout autre type de fixation. La forme du récipient 2 peut également être différente, par exemple en forme de paraison de flûte de champagne. Un récipient 2 plus haut que large présente l'avantage de permettre une bonne vision de la cuisson, mais toutes formes et dimensions sont possibles. Le récipient 2 peut aussi prendre la forme d'un broc plus grand comme représenté à la fig. 5, dans lequel on peut disposer un plat principal, plus abondant. Le réservoir 5 peut présenter les mêmes caractéristiques avec un compartiment interne 8 et un compartiment externe 11, de formes adaptées à la forme du récipient 2. La fixation du récipient 2 peut se faire par un plot 3 et une encoche 6, une soudure au niveau de sa base, ou toute autre fixation.

Le récipient 2 peut être complété par un couvercle 18 amovible représenté à la fig. 4, de préférence également transparent, par exemple en un verre de type borosilicate également. On peut prévoir un petit trou 19 dans le couvercle 18, de diamètre 2 à 3mm, pour permettre l'échappement d'air ou de vapeur quand on souhaite réaliser la cuisson avec le couvercle 18.

La fig. 4 représente un récipient selon un autre mode de réalisation.

Selon ce mode de réalisation, le récipient 2 peut comporter une double peau 20 permettant la présence d'un interstice 21, dans lequel on peut disposer un fluide caloporteur tel que de l'eau ou de l'huile, entre une paroi interne 22 du récipient 2 et la double peau 20. Lorsque la flamme sous le récipient 2 est allumée, le fluide caloporteur situé dans l'interstice 21 au niveau de la flamme se réchauffe, il devient ainsi plus léger que le fluide froid disposé plus haut, et monte donc se placer au-dessus du fluide froid plus lourd, ce qui assure une répartition de la chaleur d'une manière sensiblement uniforme dans l'interstice 21, du bas vers le haut du récipient. La répartition peut donc se faire par convection, et donc mouvement du fluide caloporteur dans l'interstice 21, mais elle peut aussi se faire par simple conduction, avec un fluide caloporteur suffisamment conducteur de la chaleur. La chaleur appliquée aux aliments à l'intérieur du récipient 2 est donc sensiblement la même sur toute la hauteur du récipient 2, et la cuisson est ainsi plus homogène. L'usage d'un récipient 2 à double peau 20 est particulièrement intéressant lorsque les aliments à cuire conduisent mal la chaleur, comme par exemple pour faire cuire un soufflé, auquel cas l'usage d'un récipient 2 sans double-peau ne permet pas une cuisson homogène.

L'usage d'un récipient 2 à double peau 20 permet par ailleurs d'ajouter au spectacle, du fait que l'on voit des bulles se former en bas de l'interstice 21 et remonter le long de la paroi du récipient 2.

Le choix de l'eau ou de l'huile, ou d'un autre fluide se fait en fonction de considérations thermiques. L'huile arrive à ébullition vers 130°, alors que l'eau y arrive vers 100°. Si on souhaite produire une température plus élevée à l'intérieur du récipient, le choix se portera donc plutôt sur l'huile.

Ce mode de réalisation peut être mis en oeuvre en combinaison, ou non, avec une fixation au niveau de la base du récipient 2, et/ou la présence d'un compartiment externe 11.

Selon un mode particulier de réalisation, on peut disposer au niveau du réservoir 5 une source de lumière 13, par exemple une LED, comme représenté aux fig. 1 et 3. Ceci a pour effet d'illuminer l'appareil 1, et en particulier le récipient 2 lorsque celui-ci est transparent, ce qui apporte un aspect féérique au spectacle de la cuisson de l'aliment. Le phénomène est particulièrement fort dans une configuration comme illustré à la fig. 1, où le plot 3 contribue à conduire la lumière vers le récipient 2. Mais toute fixation au niveau de la base du récipient 2 permet une bonne transmission de la lumière.

Ce mode de réalisation peut être mis en oeuvre en combinaison, ou non, avec la présence du compartiment externe 11, et/ou la présence d'un interstice 21 et d'une double peau 20.

L'appareil 1 peut être posé sur une assiette 14, permettant une présentation élégante de l'ensemble.

Pour faire cuire un aliment, par exemple des oeufs battus, on dispose cet aliment dans le récipient 2, puis on pose l'appareil 1 sur une base, par exemple une assiette 14, spécialement conçue pour l'invention.

Pour disposer la quantité adaptée d'alcool dans le réservoir 5, on peut prévoir, sans que cela soit obligatoire, des dosettes individuelles 15 d'alcool (voir fig. 6). Cela donne une bien plus grande souplesse de dosage que le dosage par le trop plein décrit ci avant. Une telle dosette 15 peut comporter une pointe 16 dans laquelle est préformée une rainure de rupture. Une manette 17 solidaire de l'extrémité de la pointe 16 permet de facilement tordre la pointe 16, ce qui provoque sa rupture par cisaillement au niveau de la rainure de rupture, et l'alcool peut alors être déversé tranquillement. En effet la présence de la pointe 16 permet d'éviter un déversement trop rapide. De telles dosettes 15 contiennent chacune la quantité adaptée pour une cuisson, par exemple 4 - 5 ml, d'alcool de degré adapté, par exemple de 95°. La quantité et le degré de l'alcool contenu dans une dosette 15 sont bien entendu adaptés à la cuisson prévue, à la nature et à la quantité de l'aliment, ainsi qu'au degré de cuisson recherché. On peut ainsi prévoir des dosettes 15 pour cuisson à point, et d'autres dosettes 15 pour cuisson saignant. Le degré d'alcool doit être supérieur à 92°. Cela permet d'une part une inflammation de l'alcool sans préchauffage. D'autre part un alcool en se consumant se dilue naturellement dans la quantité d'eau qu'il contient, tout en dégageant de la chaleur qui produit l'évaporation d'une partie de cette eau. En dessous de 92°, cette dilution provoque l'extinction de la flamme avant que tout l'alcool ne soit consumé. En utilisant de l'alcool à plus de 92°, par exemple 95° ou 98°, on observe que l'alcool se consume entièrement sans que la flamme ne s'éteigne, la quantité d'eau étant suffisamment faible pour qu'elle soit évaporée complètement au cours de la combustion.

L'utilisation de telles dosettes 15 individuelles présente un net avantage de sécurité et de fiabilité des cuissons. En effet, même une personne ne sachant pas faire la cuisine peut ainsi réussir un plat parfaitement réalisé. La solution des dosettes 15 permet également de limiter les risques de détournement de l'alcool de leur usage. Même l'ingestion accidentelle d'une dosette 15 par un enfant en bas âge ne suffit pas à causer des dégâts significatifs à cet enfant. Il faudrait déjà une mise en commun de plusieurs dosettes 15 pour pouvoir causer des dégâts significatifs, ce qui ne relève alors plus de l'accident.

On verse une quantité prédéterminée d'eau dans le compartiment externe 11 du réservoir 5. Cette quantité d'eau est de préférence significativement supérieure à la quantité d'alcool disposée dans le compartiment interne 8, pour garantir une bonne dilution de l'alcool qui se répandrait dans le compartiment externe 11. Mais même une faible quantité d'eau, de l'ordre de la quantité d'alcool, suffirait amplement pour éteindre les flammes de l'alcool enflammé.

On peut alors enflammer l'alcool contenu dans le compartiment interne 8, par exemple avec une allumette ou un briquet.

La cuisson de l'aliment se fait pendant la combustion de l'alcool. Lorsque l'alcool est complètement consumé, l'aliment est prêt à être servi, soit directement dans le récipient 2, soit après transvasement sur une assiette.

Selon un autre mode de réalisation de l'invention non représenté, la paroi du compartiment externe 11, aboutissant à la crête 12 est disposée inclinée rentrante vers le haut, et donc sa face interne s'approchant du récipient en montant. Une telle paroi inclinée permet de diriger la flamme vers le récipient 2, et ainsi d'améliorer le rendement thermique de la combustion, dans le sens qu'une plus grande partie de la chaleur produite sert effectivement à produire la cuisson de l'aliment. On obtient également par cette caractéristique une meilleure reproductibilité du processus, et donc la fiabilité de la réussite des cuissons, avec la quantité d'alcool et son degré tel que définis.

Selon un mode particulier de réalisation de l'invention non représenté, une paroi inclinée vers le récipient 2 est disposée au dessus de la crête 10 pour obtenir le même effet que ci-dessus.

Dans ce mode de réalisation, on peut prévoir des ouvertures disposées à la base de la paroi inclinée, au niveau de la crête 10, pour permettre l'effet de trop plein décrit ci-dessus, à un niveau bien inférieur au sommet de la paroi inclinée. On peut ainsi également obtenir un dosage, ou au moins une limitation, de la quantité d'alcool par le trop plein.

Selon un mode particulier de réalisation, le liquide de combustion peut être remplacé par un fluide froid tel que de la neige carbonique ou de l'azote liquide. Ceci est utilisé afin de refroidir les aliments dans le récipient 2, par exemple pour faire de la glace.

## Revendications

1. Appareil (1) de cuisson d'aliment du type comportant un réservoir (5) apte à recevoir un liquide de combustion et un récipient (2) destiné à recevoir ledit aliment et comportant une base à son extrémité inférieure et une paroi latérale (20), ledit appareil comportant en outre un support de maintien dudit récipient (2) en relation audit réservoir (5), ledit support de maintien étant disposé au niveau de ladite base, de sorte à laisser substantiellement toute la paroi latérale (20) visible, **caractérisé en ce que** ledit récipient est translucide ou transparent.

2. Appareil (1) selon la revendication précédente, dans lequel ledit support de maintien consiste en une soudure entre le réservoir (5) et le récipient (2), disposée à la base dudit récipient.

3. Appareil (1) selon la revendication 1, dans lequel ledit support de maintien consiste en un plot (3) solidaire dudit récipient (2), et une encoche (6) dans ledit réservoir (5), configurée pour coopérer avec ledit plot (3), de sorte que lorsque ledit plot (3) est introduit dans ladite encoche (6), le récipient (2) est maintenu par rapport audit réservoir (5).

4. Appareil (1) selon la revendication précédente, dans lequel ladite encoche (6) contient un insert (7) en un matériau élastique.

5. Appareil (1) selon l'une des revendications 3 ou 4, dans lequel ledit plot (3) comporte une partie inférieure plus large que sa partie supérieure.

6. Appareil (1) selon l'une des revendications précédentes, comportant une source de lumière (13), de préférence par LED, située au niveau du réservoir (5).

7. Appareil (1) selon l'une des revendications précédentes, dans lequel ledit réservoir (5) comprend un compartiment interne (8) destiné à recevoir le liquide de combustion, et un compartiment externe (11) destiné à recevoir de l'eau, et en ce que ledit compartiment externe (11) entoure complètement ledit compartiment interne (8).

8. Appareil (1) selon la revendication précédente, dans lequel le point le plus bas de la crête (10), définie comme le sommet de la paroi interne, située entre le compartiment interne (8) et le compartiment externe (11), est situé plus bas que le point le plus bas du sommet de la paroi externe (12), limitant vers l'extérieur le compartiment externe (11).

9. Appareil (1) selon l'une des revendications 7 ou 8, dans lequel ledit compartiment interne comporte une paroi remontant d'une façon inclinée vers le récipient (2).

10. Appareil (1) selon l'une des revendications précédentes, dans lequel ladite paroi latérale comporte un interstice (21) et une double peau (20), configurés pour contenir un fluide caloporteur apte à répartir la chaleur sur la hauteur de la paroi.

11. Procédé de cuisson d'un aliment à l'aide d'un appareil (1) selon l'une des revendications précédentes, et comportant les étapes suivantes :
- on prépare une quantité d'alcool, de préférence d'un degré supérieur à 92°, dans une dosette (15) fermée,
- on dispose un aliment à cuire dans le récipient (2),
- on ouvre la dosette (15), et on verse son contenu dans le réservoir (5),
- on enflamme l'alcool et on le laisse brûler jusqu'à ce qu'il soit entièrement consumé.

12. Procédé selon la revendication précédente, dans lequel l'étape d'ouverture de la dosette (15) se fait par rotation d'une manette (17) produisant la rupture d'une pointe (16) de la dosette (15).

13. Procédé de rafraichissement d'un aliment à l'aide d'un appareil (1) selon l'une des revendications 1 à 10, et comportant les étapes suivantes :
- on prépare une quantité de fluide froid,
- on dispose un aliment à rafraichir dans le récipient (2),
- on verse la quantité de fluide froid dans le réservoir (5) et on laisse agir.

## Patentansprüche

1. Vorrichtung (1) zum Kochen von Lebensmitteln, umfassend einen Tank (5), der zur Aufnahme einer Verbrennungsflüssigkeit geeignet ist, und einen Behälter (2), der zur Aufnahme der Lebensmittel bestimmt ist und einen Boden an seinem unteren Ende und eine Seitenwand (20) umfasst, wobei die Vorrichtung ferner einen Träger zum Halten des Behälters (2) in Bezug auf den Tank (5) umfasst, wobei der Träger an dem Boden so angeordnet ist, dass im Wesentlichen die gesamte Seitenwand (20) sichtbar bleibt, **dadurch gekennzeichnet, dass** der Behälter durchscheinend oder transparent ist.

2. Vorrichtung (1) nach dem vorstehenden Anspruch, wobei der Träger aus einer Schweißnaht zwischen dem Tank (5) und dem Behälter (2) besteht, die am Boden des Behälters angeordnet ist.

3. Vorrichtung (1) nach Anspruch 1, wobei der Träger aus einem Bolzen (3), der mit dem Behälter (2) fest verbunden ist, und einer Kerbe (6) in dem Tank (5) besteht, die so konfiguriert ist, dass sie mit dem Bolzen (3) zusammenwirkt, so dass, wenn der Bolzen (3) in die Kerbe (6) eingeführt wird, der Behälter (2) relativ zu dem Tank (5) gehalten wird.

4. Vorrichtung (1) nach einem der vorstehenden Ansprüche, wobei die Kerbe (6) einen Einsatz (7) aus einem elastischen Material enthält.

5. Vorrichtung (1) nach einem der Ansprüche 3 oder 4, wobei der Bolzen (3) einen breiteren unteren Teil als seinen oberen Teil aufweist.

6. Vorrichtung (1) nach einem der vorstehenden Ansprüche, umfassend eine Lichtquelle (13), vorzugsweise durch LED, die sich auf der Ebene des Tanks (5) befindet.

7. Vorrichtung (1) nach einem der vorstehenden Ansprüche, wobei der Tank (5) ein Innenfach (8) zur Aufnahme der Verbrennungsflüssigkeit und ein Außenfach (11) zur Aufnahme von Wasser umfasst, und dass das Außenfach (11) das Innenfach (8) vollständig umgibt.

8. Vorrichtung (1) nach dem vorstehenden Anspruch, wobei der tiefste Punkt des Steges (10), definiert als die Oberseite der Innenwand, zwischen dem Innenfach (8) und dem Außenfach (11) niedriger angeordnet ist, als der tiefste Punkt der Oberseite der Außenwand (12), die das Außenfach (11) nach außen begrenzt.

9. Vorrichtung (1) nach einem der Ansprüche 7 oder 8, wobei das Innenfach eine zum Behälter (2) hin geneigte Wand aufweist.

10. Vorrichtung (1) nach einem der vorhergehenden Ansprüche, wobei die Seitenwand einen Spalt (21) und eine Doppelhaut (20) aufweist, die so konfiguriert ist, dass sie ein Wärmeübertragungsfluid enthalten kann, das Wärme über die Höhe der Wand verteilen kann.

11. Verfahren zum Kochen eines Lebensmittels unter Verwendung einer Vorrichtung (1) nach einem der vorhergehenden Ansprüche und mit den folgenden Schritten, wobei :
- eine Menge Alkohol, vorzugsweise über 92°, in einer geschlossenen Hülse (15) zubereitet wird,
- ein zu kochendes Lebensmittel in den Behälter (2) gelegt wird,
- die Hülse (15) geöffnet und seinen Inhalt in den Behälter (5) gefüllt wird,
- der Alkohol entzündet und verbrannt wird, bis er vollständig verbrannt ist.

12. Verfahren nach dem vorhergehenden Anspruch, bei dem der Schritt des Öffnens der Hülse (15) durch Drehen eines Hebels (17) erfolgt, der das Brechen einer Spitze (16) der Hülse (15) bewirkt.

13. Verfahren zum Kühlen eines Lebensmittels unter Verwendung einer Vorrichtung (1) nach einem der Ansprüche 1 bis 10 und mit den folgenden Schritten, wobei :
- eine Menge kalten Flüssigkeit vorbereitet wird,
- ein Lebensmittel zum Kühlen in den Behälter (2) gelegt wird,
- die Menge der kalten Flüssigkeit in den Tank (5) gegossen und wirken gelassen wird.

## Claims

1. Appliance (1) for cooking foodstuff of the type comprising a tank (5) that is able to receive a combustion liquid and a container (2) intended to receive said foodstuff and comprising a base at its lower end and a side wall (20), said appliance further comprising a holder for holding said container (2) in relation to said tank (5), said holder being disposed at the level of said base, so as to leave substantially all the side wall visible (20), **characterized in that** said container is translucent or transparent.

2. Appliance (1) according to the previous claim, wherein said holder consists of a weld between the tank (5) and the container (2), arranged at the base of said container.

3. Appliance (1) according to claim 1, wherein said holder consists of a plug (3) integral with said container (2), and a slot (6) in said tank configured to cooperate with said plug (3), so that when said plug (3) is inserted into said slot (6), the container (2) is held relative to said tank (5).

4. Appliance (1) according to the previous claim, wherein said slot (6) contains an insert (7) made of an elastic material.

5. Appliance (1) according to one of the claims 3 or 4, wherein said plug (3) comprises a lower part wider than its upper part.

6. Appliance (1) according to one of the previous claims, comprising a light source (13), preferably by LED, located at the level of the tank (5).

7. Appliance (1) according to one of the previous claims, wherein said tank (5) comprises an inner compartment (8) intended to receive the combustion liquid, and an outer compartment (11), intended to receive water, and in that said outer compartment (11) completely surrounds said inner compartment (8).

8. Appliance (1) according to the previous claim, wherein the lowest point of the ridge (10), defined as the top of the inner wall, between the inner compartment (8) and the outer compartment (11), is located lower than the lowest point of the top of the outer wall (12), limiting the outer compartment (11) towards the outside.

9. Appliance (1) according to one of the claims 7 or 8, wherein said inner compartment comprises a wall rising in an inclined manner towards the container (2).

10. Appliance (1) according to one of the previous claims, wherein said side wall comprises a gap (21) and a double skin (20), configured to contain a heat transfer fluid capable of distributing the heat over the height of the wall.

11. A method for cooking a foodstuff with an appliance (1) according to one of the previous claims, comprising the following steps:
- an amount of alcohol, preferably of a degree greater than 92°, is prepared in a closed pod (15),
- a foodstuff to be cooked is placed in the container (2),
- the pod (15) is opened and its contents are poured into the tank (5),
- the alcohol is ignited and allowed to burn until it is completely consumed.

12. Method according to the previous claim, wherein the step of opening the pod (15) is performed by rotating a lever (17) which produces the rupture of a tip (16) of the pod (15).

13. Method for refreshing a foodstuff using an appliance (1) according to one of the claims 1 to 10, comprising the following steps:
- an amount of cold fluid is prepared,
- a foodstuff to be refreshed is placed in the container (2),
- the amount of cold fluid is poured into the tank (5) and allowed to act.
